# EUROPEAN PATENT APPLICATION

(11) **EP 2 469 503 A1**
(43) Date of publication of application: **27.06.2012**
(21) Application number: 10306470.5
(22) Date of filing: 21.12.2010
(51) Int. Cl.: G09G 3/20

(54) **Computer device comprising a first and a second display screen, method of operating the computer device and computer readable storage medium.**

(71) Applicant: Thomson Licensing, 92130 Issy-les-Moulineaux (FR)
(72) Inventor: Lindemann, Robert, 30559, Hannover (DE)
(74) Representative: Arnold, Klaus-Peter

(57) **Abstract**

The method for operating a computer device (1, 10) comprising a microprocessor, an operating system and a first and a second display screen (DS1, DS2), comprises the steps of observing the activity of a user, reducing the brightness of the second display screen (DS2), when the user is utilizing the first display screen (DS1), and reducing the brightness of the first display screen (DS1), when the user is utilizing the second display screen (DS2). The power consumption of the computer device is reduced therefore. The computer device (1, 10) comprises a first and a second display screen and an operating system for operating the first and the second display screen. The operating system observes the activity of a user for reducing the brightness of the second display screen, respectively of the first display screen.

## Description

### TECHNICAL FIELD OF THE INVENTION

The present invention relates to a computer device comprising a first and a second display screen and an operating system utilizing a method for reducing the power consumption of the two display screens.

### BACKGROUND

Computer devices are widely used nowadays in private homes and in companies and allow a user to retrieve a vast amount of information and to create and modify content. More and more computer devices are equipped with two or more display screens, e.g. desktop PCs in companies being equipped with two or more computer monitors. Two display screens are useful for example when a user actively works on a first display screen while the second display screen is only used for having additional information ready for use, and wherein the second monitor is typically not looked at when working on the first monitor.

A computer display screen consumes a considerable amount of the total power consumption of the computer device. For saving energy, it is known to switch a display screen to standby whenever a user did not make an input for a predetermined time. When the user uses again a keyboard or a mouse of the computer device, the display screen is switched back to normal operation.

US 2003/0146897 describes a computer device comprising a display screen, in which a focus area and a non-focus area are determined. The focus area is e.g. an active window of the display screen and the non-focus area an inactive window of the display screen. In another example, the focus area is a region of the display screen within a vicinity of a cursor or a data entry point, and a non-focus area is a region outside this vicinity. To reduce overall power consumption of the computer device, the brightness of the non-focus area is reduced with respect to the focus area. However, for present LCD display screens using cold cathode fluorescence lamps (CCFL) for the backlight, or LED backlight not capable of local dimming, which are widely used today, the power consumption is not reduced by this method.

WO 2010/039193 describes a portable computer device comprising a first display screen and a second display screen, designed for example for use in schools. The first display screen is in particular an electronic paper display (EPD) based bi-stable display screen having a very low power consumption, which is advantageously applicable for using text, but which allows only grey scale images and has a limited functionality to its slow refresh rate. The second display screen uses refresh display technology, e.g. LCD, LED or plasma display panel technology for providing a rich set of display functionalities for a user. When the user uses only the bi-stable display screen, the refresh display screen is switched off, for reducing power consumption of the computer device. The power saving functionality enables the computer device to have a battery operating live of eight hours or more, when using predominantly the bi-stable display screen.

### BRIEF SUMMARY OF THE INVENTION

The method for operating a computer device comprising a microprocessor, an operating system and a first and a second display screen comprises the steps of observing the activity of a user, for reducing the brightness of the second display screen, when the user is utilizing the first display screen, and for reducing the brightness of the first display screen, when the user is utilizing the second display screen. The power consumption of the computer device is reduced therefore.

The term "utilizing" as used in this specification comprises, but is not limited to, user activities carried out on a respective display screen, e.g. data input or the like, as well as a user's interest being focused on a respective display screen, e.g. when watching or reading content displayed on that display screen, or the like.

The computer device comprises a first and a second display screen and an operating system for operating the first and the second display screen, the operating system being stored e.g. within a microprocessor or in a storage means coupled to the microprocessor. The operating system observes the activity of a user, and reduces the brightness the second display screen, when the user is utilizing the first display screen, and reduces the brightness the first display screen, when the user is utilizing the second display screen.

In a further aspect of the invention, the computer device comprises a camera for observing the eye movement of the user, and a hardware or software-implemented eye-tracking function, allowing for determining whether a user focuses his attention on the first or second display screen. Accordingly, the the second display screen is dimmed when the user is looking to the first display screen, and the first display screen is dimmed when the user is looking to the second display screen. The camera is advantageously a webcam arranged in one of the display screens, or even both display screens may be equipped with a webcam. Alternatively or in addition, the camera observes the direction of the head of the user, and dims the second display screen, when the head is directed to the first display screen and dims the first display screen, when the head of the user is directed to the second display screen.

In another aspect of the invention, the operating system observes the activity of an input means of the computer device and dims the second display screen, when the input means is active on the first display screen, and dims the first display screen, when the input means is active on the second display screen. The input means are e.g. a keyboard and/or a computer mouse coupled to the computer device, buttons or touch-sensitive touch pads. Activity may be located by determining on which display screen an active input window or field is displayed, or on which display a mouse pointer is displayed.

In yet another aspect of the invention, the operating system autonomously dims one screen while lighting the other screen in order to draw a user's attention to a notification window or to an input field requiring immediate user attention, or the like.

In yet another embodiment the invention can advantageously help focusing a user's attention to work currently done on one display screen, e.g. when a user would otherwise be distracted by pop-up messages or windows on the other display screen. In this case the display screen, on which the message is displayed, is kept dimmed, so that a user is less likely to notice the message and is not enticed to move his attention. In an example only data having a very high importance, received via Internet, trigger the switchover between the display screens, i.e. important e-mail messages, but not any pop-up messages. The behaviour, including the levels indicating importance, can preferably be set by the user depending on the user's preferences and requirements and/or the system's requirements.

The computer device is for example a portable computer device, e.g. a netbook or an electronic book. The battery lifetime can be extended therefore for the portable computer device with the present invention.

In a further aspect of the invention, a computer readable storage medium comprises a computer program, an operating system or a software application for upgrading an operating system, for performing the method according to the present invention. The computer readable storage medium is for example an USB stick or an optical disc. The computer program and the software application are designed for upgrading an operating system of an already existing computer device.

Dimming may be used preferably over switching off a display screen in order to speed up the switchover process between the display screen. This is particularly relevant when cold cathode fluorescent lamps, or CCFL, are used as backlights, because this kind of lamps requires some time after being switched on for obtaining a rated light output. Also, the off-on switching cycles of a background illumination may be limited. Here, dimming advantageously reduces the stress and wear to the backlight, and may increase the useful lifetime. Also, dimming provides a smoother transition that is more pleasant to the eye of a user.

It goes without saying that the invention may be used in setups having more than two display screens.

### BRIEF DESCRIPTION OF THE DRAWINGS

Preferred embodiments of the invention are explained in more detail below by way of example with reference to schematic drawings, which show:
- Fig. 1: a personal computer comprising a first and a second display screen, a keyboard and a mouse, and
- Fig. 2: an electronic book comprising a first and a second display screen.

### DETAILED DESCRIPTION OF PREFERRED EMBODIMENTS

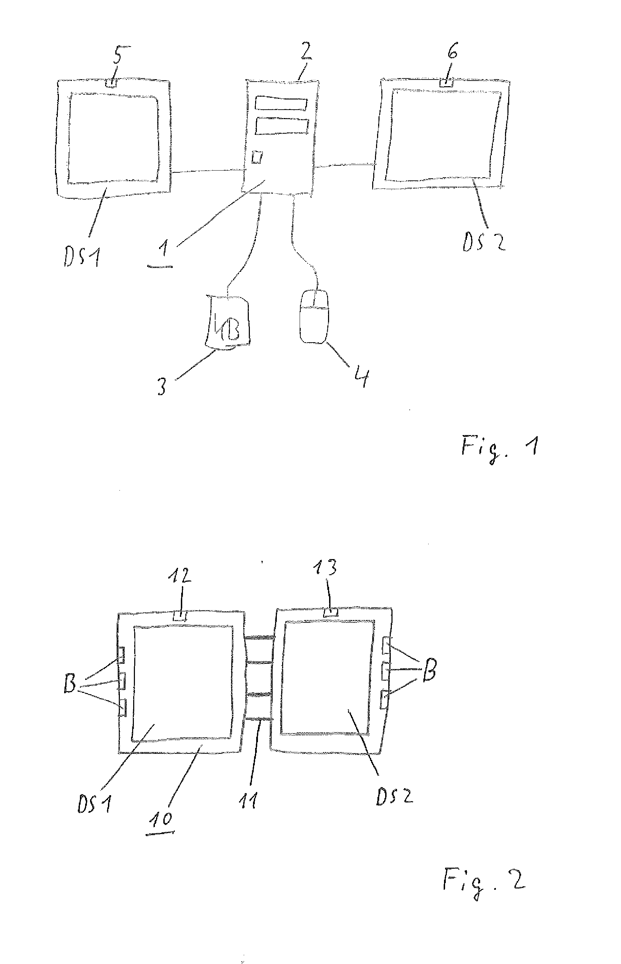

In Figure 1 a personal computer 2 is shown, to which a first display screen DS1 and a second display screen DS2, a keyboard 3 and a computer mouse 4 are connected. The personal computer 2 comprises in particular a microprocessor and a memory means, not shown, in which an operating system is stored.

The personal computer 2, display screens DS1, DS2 together with the keyboard 3 and computer mouse 4 resemble a computer device 1, which can be used by a user for retrieving and viewing information and for creating and modifying content. A user is e.g. editing any text of a story displayed in the first display screen DS1 by using the keyboard 3 and the computer mouse 4. The second display screen DS2 is not used by the user and is therefore in a standby mode or dimmed.

The user, when editing the text displayed on the first display screen DS1, may require occasionally additional data, which are provided by the operating system by means of the display screen DS2. The user looks therefore occasionally to the display screen DS2 for retrieving the additional data. To observe the viewing direction of the user, or the eye movement of the user, the computer device comprises at least a first camera, e.g. a webcam located at the display screen DS1 and/or at the display screen DS2. In this embodiment, a webcam 5 is located at the display screen DS1 and a webcam 6 is located at the display screen DS2. The webcams 5 and 6 are connected with the microprocessor of the personal computer 1 and the information provided by the webcams 5, 6 is analyzed by the operating system to observe the direction of the head of the user or to observe the eye movement of the user, and to determine whether the user is looking to display screen DS1 or display screen DS2.

When the user is working with the first display screen DS1 and the user is looking correspondingly to the first display screen DS1, the brightness of the display screen DS2 is dimmed by the operating system to reduce the power consumption of the computer device 1. When the user is looking to the second display screen DS2, the movement respectively orientation of the head and/or the eye movement of the user are observed by means of the webcams 5, 6 and the brightness of the display screen DS2 is increased to normal operation for providing the respecting information. When the user is looking for a longer time period only to the second display screen DS2, for example more than 5 seconds, the brightness of the first display screen DS1 is dimmed. When the user is looking again in a further step to the first display screen DS1, the movement respectively orientation of the head and/or the eye movement of the user are observed by means of the webcams 5, 6 and the brightness of the display screen DS2 is dimmed and the brightness of the display screen DS1 is increased to normal operation by the operating system.

The brightness of the second display screen DS2 is reduced therefore, when the user is utilizing the first display screen DS1, and the brightness of the first display screen DS1 is reduced, when the user is utilizing the second display screen DS2. Correspondingly, the brightness of the second display screen DS2 is increased, when the user is looking from the display screen DS1 to display screen DS2, and the brightness of the first display screen DS1 is increased, when the user is looking from the display screen DS2 to display screen DS1.

The display screens DS1 and DS2 are for example LCD monitors including fluorescence lamps or LEDs as a backlight illumination. When dimming one of the display screens, the respective backlight is reduced by reducing the current to the fluorescence lamps or LEDs, for reducing the power consumption of the display screens. As an alternative, the LCD monitors are switched to a standby mode, in which the fluorescence lamps or LEDs are completely switched off.

In another embodiment of the invention, the user is utilizing an input means, e.g. the keyboard 3 and/or the computer mouse 4, for modifying or viewing information in the first display screen DS1. The computer mouse 4 is used for controlling a mouse pointer displayed on the first display screen DS1. The brightness of the second display screen DS2 is reduced then in this situation. When the user switches the input means to the second display screen DS2, so that the keyboard 3 and the computer mouse 4 are active in the display screen DS2, the brightness of the second display screen DS2 is increased and the brightness of the first display screen DS1 is reduced. Correspondingly, when the user switches the input means from the second display screen DS2 to the first display screen DS1, the brightness of the second display screen DS2 is reduced and the brightness of the first display screen DS1 is increased. In this embodiment, no camera is required to observe the viewing direction or the eye movement of the user.

In a further embodiment, the computer device is an electronic book 10 shown in figure 2. The electronic book 10 comprises a first display screen DS1 and a second display screen DS2. In one of the display screens DS1 or DS2 a microprocessor, a memory means and an operating system stored in the memory means are included for operating in particular the display screens DS1 and DS2. The display screens DS1 and DS2 comprise buttons B for operating the electronic book 10 and both display screens are connected together by a hinge 11. The display screens DS1, DS2 comprise in addition touch-sensitive touch pads or touch screens for viewing and modifying information.

The activity of a user is observed by means of the microprocessor running the operating system, by controlling whether the user is using the touch screen and/or buttons B of the display screen DS1 or the touch screen and/or buttons B of display screen DS2, and when the user is utilizing the first display screen DS1, the brightness of the second display screen DS2 is reduced and when the user is utilizing the second display screen DS2, the brightness of the first display screen DS1 is reduced, in correspondence with the embodiment described with regard to Fig. 1.

In addition, the electronic book 10 may comprise at least a first camera coupled to the microprocessor, e.g. a first webcam 12 located at display screen DS1 and a second webcam 13 located at display screen DS2.

The webcams 12, 13 are observing the activity of a user, and when the user is utilizing the first display screen DS1, the brightness of the second display screen DS2 is reduced and when the user is utilizing the second display screen DS2, the brightness of the first display screen DS1 is reduced.

In addition, or alternatively, the microprocessor uses information provided by the webcams 12, 13 by observing the orientation of the head of the user or the eye movement of the user for dimming and increasing the brightness of the first display screen DS1 or second display screen DS2, as described with regard to the embodiment shown in figure 1.

Also other embodiments of the invention can be made by a person skilled in the art without departing from the spirit and scope of the present invention. The invention is in particular not limited to LCD display screens and also any other display technology like OLED may be utilized for the display screens DS1, DS2. The invention recites therefore in the claims herein after appended.

## Claims

1. Method of operating a computer device (1, 10) comprising a microprocessor, an operating system and a first and a second display screen (DS1, DS2), **characterized by** the steps of
observing the activity of a user,
reducing the brightness of the second display screen (DS2), when the user is utilizing the first display screen (DS1), and
reducing the brightness of the first display screen (DS1), when the user is utilizing the second display screen (DS2).

2. The method of claim 1, comprising the steps of observing the eye movement of the user, and reducing the brightness of the second display screen (DS2), when the user is looking to the first display screen (DS1), and reducing the brightness the first display screen (DS1), when the user is looking to the second display screen (DS2).

3. The method of claim 1 or 2, comprising the steps of observing the direction of the head of the user, and reducing the brightness of the second display screen (DS2), when the head of the user is directed to the first display screen (DS1), and reducing the brightness of the first display screen (DS1), when the head of the user is directed to the second display screen (DS2).

4. The method of claim 2 or 3, comprising the step of using a camera (5, 6, 12, 13), for example a webcam, of the computer device (1, 10) for observing the eye movement of the user and/or for observing the direction of the head of the user.

5. The method of claim 1, comprising the steps of observing the activity an input means (3, 4, B) of the computer device (1, 10), and reducing the brightness of the second display screen (DS2), when the input means is active on the first display screen (DS1), and reducing the brightness of the first display screen (DS1), when the input means is active on the second display screen (DS2).

6. The method of claim 5, comprising the steps of observing the activity of a keyboard (3) of the computer device, and reducing the brightness of the second display screen (DS2), when the keyboard is used for the first display screen (DS1), and reducing the brightness of the first display screen (DS1), when the keyboard is used for the second display screen (DS2).

7. The method of claim 5 or 6, comprising the steps of observing the location of a mouse pointer controlled by a computer mouse (4) of the computer device, and reducing the brightness of the second display screen (DS2), when the mouse pointer is displayed and active on the first display screen (DS1), and reducing the brightness of the first display screen (DS1), when the mouse pointer is displayed and active on the second display screen (DS2).

8. The method of one of the preceding claims, comprising the steps of reducing the brightness by dimming the first or the second display screen (DS1, DS2), or operating the first or the second display screen (DS1, DS2) in a standby mode for reducing the brightness.

9. The method of one of the preceding claims, comprising the step of switching over between the first and the second display screens (DS1, DS2), when receiving data via Internet having a user defined importance.

10. Computer device (1, 10) comprising a first and a second display screen (DS1, DS2), a microprocessor and an operating system for operating the first and the second display screens, adapted to perform a method according to one of the preceding claims.

11. The computer device of claim 10, wherein the computer device is a portable computer device (10).

12. The computer device of claim 11, wherein the portable computer device is a netbook or an electronic book (10) .

13. Computer readable storage medium comprising a computer program, a software application or an operating system for performing a method according to one of the claims 1-9.
